# EUROPÄISCHE PATENTANMELDUNG

(11) **EP 4 610 504 A1**
(43) Veröffentlichungstag der Anmeldung: **03.09.2025**
(21) Anmeldenummer: 25159157.4
(22) Anmeldetag: 20.02.2025
(51) Int. Cl.: F16B 39/22, F16B 25/00

(54) **BEFESTIGUNGSMITTEL, VERFAHREN ZUM ANORDNEN EINES BEFESTIGUNGSMITTELS UND ANORDNUNG**

(30) Priorität: 01.03.2024 DE 102024106015
(71) Anmelder: Adolf Würth GmbH & Co. KG, 74653 Künzelsau (DE)
(72) Erfinder: BARZ, Arne, 74586 Frankenhardt (DE); BREIDENBACH, Marie, 74257 Untereisesheim (DE); RÖCK, David, 86169 Augsburg (DE); WANG, Xiaohan, 74653 Künzelsau (DE)
(74) Vertreter: Patentanwälte Ruff, Wilhelm, Beier, Dauster & Partner mbB

(57) **Zusammenfassung**

Die Erfindung betrifft ein Befestigungsmittel, insbesondere eine Holzschraube (10) aus Metall, mit einem Schaft (12), der abschnittsweise mit einem Gewinde (14) versehen ist, und mit einem Kopf (16) mit einer Antriebsausbildung, wobei der Schaft wenigstens im Bereich des Gewindes mit einer Klebstoffbeschichtung (24) versehen ist, wobei die Klebstoffbeschichtung thermoplastisch und/oder warmhärtend ausgebildet ist.

## Beschreibung

Die Erfindung betrifft ein Befestigungsmittel, insbesondere eine Holzschraube aus Metall, mit einem Schaft, der wenigstens abschnittsweise mit einem Gewinde versehen ist, und mit einem Kopf mit einer Antriebsausbildung. Die Erfindung betrifft auch ein Verfahren zum Anordnen eines erfindungsgemäßen Befestigungsmittels in wenigstens einem Werkstück. Die Erfindung betrifft weiter eine Anordnung mit wenigstens einem erfindungsgemäßen Befestigungsmittel und wenigstens einem Werkstück, wobei der Schaft des Befestigungsmittels wenigstens abschnittsweise in dem Werkstück angeordnet ist.

Aus der europäischen Patentschrift EP 0 955 476 B2 ist das Einkleben einer Betonschraube in ein Werkstück aus Beton bekannt.

Aus der europäischen Patentschrift EP 3 578 832 B1 ist das Einkleben einer Porenbetonschraube in Porenbeton bekannt.

Mit der Erfindung soll die Belastbarkeit einer Verbindung zwischen einem Befestigungsmittel mit einem Gewinde und einem Werkstück bei einfacher Handhabung verbessert werden.

Erfindungsgemäß ist hierzu ein Befestigungsmittel mit den Merkmalen von Anspruch 1, ein Verfahren mit den Merkmalen von Anspruch 5 bzw. eine Anordnung mit den Merkmalen von Anspruch 9 vorgesehen. Vorteilhafte Weiterbildungen der Erfindung sind in den jeweiligen Unteransprüchen genannt.

Ein erfindungsgemäßes Befestigungsmittel, insbesondere eine Holzschraube aus Metall, weist einen Schaft, der wenigstens abschnittsweise mit einem Gewinde versehen ist, und einen Kopf mit einer Antriebsausbildung auf. Der Schaft ist wenigstens im Bereich des Gewindes mit einer Klebstoffbeschichtung versehen, wobei die Klebstoffbeschichtung thermoplastisch und/oder warmhärtend ausgebildet ist.

Indem der Schaft des Befestigungsmittels vor dem Eindrehen des Befestigungsmittels in ein Werkstück mit einer thermoplastischen und/oder warmhärtenden Klebstoffbeschichtung versehen ist, wird die Klebstoffbeschichtung beim Einschrauben des Befestigungsmittels durch Reibungswärme im Übergangsbereich Werkstück/Befestigungsmittel flüssig, zumindest weich. Die Klebstoffbeschichtung kann dadurch in Zwischenräume zwischen dem Gewinde des Befestigungsmittels und dem Werkstück und auch in Zwischenräume zwischen einem nicht mit einem Gewinde versehenen Schaftabschnitt des Befestigungsmittels und dem Werkstück eintreten. Beispielsweise tritt die Klebstoffbeschichtung zwischen Holzfasern ein, die durch das Gewinde angeschnitten sind. Nach dem Aushärten bzw. Erstarren, allgemein Verfestigen, der Klebstoffbeschichtung sind die Holzfasern untereinander und/oder auch mit dem Schaft des Befestigungsmittels verklebt, so dass ein Formschluss zwischen Werkstück und Befestigungsmittel realisiert ist. Nach dem Aushärten bzw. Erstarren ist die volle Tragfähigkeit der Verbindung vorhanden. Die Tragfähigkeit ist dabei höher als beim einfachen Einschrauben des Befestigungsmittels ohne zusätzliche Klebstoffbeschichtung. Denn zusätzlich zu der Verbindung zwischen Befestigungsmittel und Werkstück mittels des Gewindes wird ein Stoffschluss zwischen dem Werkstück und dem Befestigungsmittel erzielt. Im Falle von Holz oder Holzwerkstoff werden beispielsweise durch das Gewinde angeschnittene Fasern miteinander und mit dem Befestigungsmittel verklebt. Die Handhabung des erfindungsgemäßen Befestigungsmittels ist dabei denkbar einfach. Da die Klebstoffbeschichtung bereits auf dem Schaft des Befestigungsmittels angeordnet ist, sind keinerlei Vorarbeiten erforderlich. Nur durch das Einschrauben des Befestigungsmittels in das Werkstück wird die Klebstoffbeschichtung weich oder verflüssigt sich und, nach dem Ende des Einschraubvorgangs, kühlt der Klebstoff der Klebstoffbeschichtung ab und erstarrt und/oder härtet aus. Die Handhabung des erfindungsgemäßen Befestigungsmittels entspricht infolgedessen der Handhabung eines konventionellen Befestigungsmittels mit Gewinde, insbesondere einer Holzschraube. Dennoch wird durch einfaches Einschrauben des erfindungsgemäßen Befestigungsmittels eine höhere Tragfähigkeit der Verbindung zwischen Befestigungsmittel und Werkstück gegenüber konventionellen Befestigungsmitteln mit Gewinde erzielt.

In Weiterbildung der Erfindung ist das Befestigungsmittel als Vollgewindeschraube, bei der sich das Gewinde über den vollständigen Schaft erstreckt, als Teilgewindeschraube, bei der sich das Gewinde nur über einen Abschnitt des Schafts erstreckt, als Stockschraube oder als Gewindestange ausgebildet, wobei insbesondere das Gewinde als Holzgewinde ausgebildet ist.

Ein Holzgewinde bildet in Holz oder Holzwerkstoff, beispielsweise Massivholz, insbesondere Fichte, Kiefer, Buche, Lärche, Leimholz, Schichtholz, Furnierschichtholz, Sperrholz, Holzwerkstoff aus Fasern oder Holzteilen, beispielsweise Holzfaserplatten insbesondere aus mitteldichten Fasern, Pressspan, Kunstharz-Pressholz, die Gewindegänge selbst aus. Das Befestigungsmittel kann mit einer Bohrspitze versehen sein. Ein Kopf des Befestigungsmittels, insbesondere ein Schraubenkopf, und eine Antriebsausbildung kann in beliebiger Weise ausgebildet sein.
In Weiterbildung der Erfindung ist vorgesehen, dass die Klebstoffbeschichtung
- Klebstoffe aufweist, die unter anderem zwei Hydroxphenyl-Gruppen tragen, insbesondere Bisphenol-A-Epichlorhydrinharze und/oder Bisphenol-F-Epichlorhydrinharze, insbesondere 1,6-Bis(2,3-epoxypropoxy)hexan / 1,4-Bis(2,3-epoxypropoxy)butan / 2,2-Bis(4-hydroxyphenyl)propan,
- Klebstoffe aufweist, die unter anderem durch Polymerisation von Acrylsäure-Estern hergestellt werden, insbesondere Tetramethylendimethacrylat, Methacrylsäure, 1,2-Cyclohexandicarboxylsäure, 1,2-Diisononylester, 1,6-Hexandiylbismethacrylat, 2-Ethylhexylmethacrylat und/oder Tetrahydrofurfurmethacrylat,
- Klebstoffe aufweist, die unter anderem durch Polymerisation aus Alkenen, insbesondere Ethylen, Propylen, hergestellt werden, insbesondere Ethylen-Propylen-Copolymer, Polyethylen, Polypropylen und/oder Ethylen-Vinylacetat,
- Klebstoffe aufweist, die auf Basis einer der o.g. Polymere in Kombination mit klebrig machenden Harzen und/oder Wachsen und/oder Additiven hergestellt werden,
- und/oder Klebstoffe aufweist, die unter anderem durch die Polymerisierung von Styrol hergestellt werden, insbesondere Styrol-Butadien-Polymer, Acrylnitril-Butadien-StyrolCopolymer und/oder Styrol-Acrylnitril-Copolymer.

Es hat sich herausgestellt, dass diese Klebstoffe sehr gut für den vorgesehenen Einsatzzweck geeignet sind und sich durch die Reibungswärme beim Eindrehen des Gewindes des Befestigungsmittels in das Werkstück ausreichend stark verflüssigen und/oder weich werden, um eine zuverlässige Verklebung zwischen Werkstück und Befestigungsmittel zu erzielen.

In Weiterbildung der Erfindung ist die Klebstoffbeschichtung durch Eintauchen des Schafts in flüssigen Klebstoff und anschließendes Verfestigen des Klebstoffs aufgebracht.

Auf diese Weise kann die Klebstoffbeschichtung in sehr einfach handhabbarer Weise aufgebracht werden. Vor dem Aufbringen der Klebstoffbeschichtung auf den Schaft der Schraube wird der Klebstoff durch Wärmezufuhr in einen flüssigen Zustand gebracht werden oder beispielsweise auch durch Mischen mit einem Lösungsmittel in einen flüssigen Zustand gebracht. Das Abkühlen des Klebstoffs und/oder das Verdampfen des Lösemittels führt dann zum Verfestigen des Klebstoffs, so dass dadurch die Klebstoffbeschichtung auf dem Schaft gebildet ist. Im Rahmen der Erfindung kann die Klebstoffbeschichtung auch aufgesprüht werden.

Bei einem Verfahren zum Anordnen eines erfindungsgemäßen Befestigungsmittels in wenigstens einem Werkstück, insbesondere aus Holz oder Holzwerkstoff, sind folgende Schritte vorgesehen:

Einschrauben des Befestigungsmittels in das Werkstück, insbesondere in eine Bohrung im Werkstück, wenigstens teilweises Verflüssigen der Klebstoffbeschichtung unter Temperatureinfluss der beim Einschrauben entstehenden Reibungswärme, Verfestigen des Klebstoffs und dadurch Herstellen eines Stoffschlusses zwischen dem Werkstück und dem Schaft des Befestigungsmittels.

Die Klebstoffbeschichtung erwärmt sich beim Einschrauben durch Reibung zwischen der Klebstoffbeschichtung und/oder dem Schaft einerseits und dem Werkstück andererseits. Das Verfestigen des Klebstoffs erfolgt durch Erstarren und/oder Aushärten. Im Rahmen der Erfindung können infolgedessen thermoplastische Klebstoffe oder warmhärtende Klebstoffe oder Mischungen hieraus eingesetzt werden. Das erfindungsgemäße Verfahren ist dabei sehr einfach handhabbar, da die Klebstoffbeschichtung vor dem Einschrauben des Befestigungsmittels in das Werkstück nur schwach klebend oder nicht klebend ausgebildet ist. Das erfindungsgemäße Befestigungsmittel kann dabei in exakt derselben Weise gehandhabt werden wie ein konventionelles Befestigungsmittel mit Gewinde aber ohne Klebstoffbeschichtung. Die beim Einschrauben entstehende Reibungswärme sorgt für eine Verflüssigung bzw. Erweichung der Klebstoffbeschichtung. Nach dem Abkühlen und Erstarren des Klebstoffs bzw. dem Aushärten des Klebstoffs der Klebstoffbeschichtung ist dann die endgültige Tragfähigkeit der Verbindung vorhanden.

In Weiterbildung der Erfindung ist das Vorbohren des Werkstücks und das Herstellen eines Bohrlochs mit einem Bohrlochdurchmesser vorgesehen, der kleiner oder gleich dem Kerndurchmesser des Gewindes am Schaft ist.

Auf diese Weise ist sichergestellt, dass die Reibung beim Einschrauben des Befestigungsmittels in das vorgebohrte Bohrloch ausreichend groß ist, um genügend Reibungswärme zum Verflüssigen bzw. Erweichen der Klebstoffbeschichtung bereitzustellen. Vor allem aber ist durch eine solche Bemessung des Bohrlochs sichergestellt, dass die Verbindung zwischen Befestigungsmittel und Werkstück unmittelbar nach Einschrauben des Befestigungsmittels bereits tragfähig ist, da das Gewinde in die Wand des Bohrlochs eingreift. Vorbohren des Werkstücks kann auch notwendig sein, um ein Spalten des Werkstücks, insbesondere bei Werkstücken aus Holz oder Holzwerkstoff, zu vermeiden. Nach dem Verfestigen des Klebstoffs wird dann eine noch höhere Tragfähigkeit und auch eine höhere Steifigkeit der Verbindung erreicht. Dadurch, dass beim Verarbeiten des erfindungsgemäßen Befestigungsmittels aber bereits unmittelbar nach dem Einschrauben eine tragfähige Verbindung vorliegt, kann das erfindungsgemäße Befestigungsmittel sehr schnell und ohne Wartezeiten verarbeitet werden. Bei dem erfindungsgemäßen Verfahren ist das Eindringen wenigstens eines Teils des Klebstoffs in das Werkstück beim Verflüssigen bzw. Erweichen der Klebstoffbeschichtung vorgesehen.

In Weiterbildung der Erfindung erfolgt das Einschrauben des Befestigungsmittels in ein Werkstück aus Holz oder Holzwerkstoff, wobei beim Verflüssigen bzw. Erweichen der Klebstoffbeschichtung der Klebstoff wenigstens teilweise zwischen Holzfasern, insbesondere angeschnittene Holzfasern, des Werkstücks eindringt, und es ist das Verkleben von Holzfasern untereinander und mit dem Schaft des Befestigungsmittels beim Erstarren und/oder Aushärten des Klebstoffs vorgesehen.

Gerade in Werkstücken aus Holz oder Holzwerkstoff können dadurch sehr hohe Werte für die Tragfähigkeit und Steifigkeit der Verbindung erzielt werden, die weit über den Werten liegen, die mit konventionellen Befestigungsmitteln erreicht werden können. Denn die beim Einschrauben des Gewindes angeschnittenen Holzfasern werden durch den Klebstoff der Klebstoffbeschichtung miteinander sowie auch mit dem Schaft des Befestigungsmittels verklebt.

Bei einer Anordnung mit wenigstens einem erfindungsgemäßen Befestigungsmittel und wenigstens einem Werkstück ist der Schaft des Befestigungsmittels wenigstens abschnittsweise in dem Werkstück angeordnet und der beim Einschrauben des Befestigungsmittels in das Werkstück wenigstens teilweise verflüssigte Klebstoff der Klebstoffbeschichtung ist wenigstens teilweise in das den Schaft des Befestigungsmittels umgebende Material des Werkstücks eingedrungen und dort verfestigt.

In Weiterbildung der Erfindung besteht das Werkstück aus Holz oder Holzwerkstoff und Holzfasern des Werkstücks, insbesondere angeschnittene Holzfasern, sind mittels des Klebstoffs der Klebstoffbeschichtung miteinander und mit dem Schaft des Befestigungsmittels verklebt.

Auf diese Weise kann ein sehr tragfähiger Stoffschluss zwischen dem Befestigungsmittel und dem Werkstück erzielt werden.

In Weiterbildung der Erfindung sind die Holzfasern des Werkstücks und der Schaft des Befestigungsmittels im Bereich des Gewindes des Schafts miteinander verklebt.

Auf diese Weise können speziell durch das Gewinde angeschnittene Holzfasern miteinander und mit dem Schaft des Befestigungsmittels verklebt werden. Auf diese Weise kann die Tragfähigkeit und Steifigkeit der Verbindung zwischen Befestigungsmittel und Werkstück nach dem Verfestigen des Klebstoffs erheblich gegenüber konventionellen Befestigungsmitteln mit Gewinde erhöht werden.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, in den Zeichnungen dargestellten und der Beschreibung beschriebenen Ausführungsformen der Erfindung können dabei in beliebiger Weise miteinander kombiniert werden, ohne den Rahmen der Erfindung zu überschreiten. Dies gilt auch für die Kombination von Einzelmerkmalen ohne weitere Einzelmerkmale, mit denen sie im Zusammenhang dargestellt und/oder beschrieben sind.

In den Zeichnungen zeigen:
- Fig. 1: eine Seitenansicht eines erfindungsgemäßen Befestigungsmittels,
- Fig. 2: die Einzelheit A aus Fig. 1 im vergrößerten Maßstab,
- Fig. 3: eine teilweise geschnittene Ansicht einer Anordnung mit einem Werkstück und dem in das Werkstück eingeschraubten Befestigungsmittel der Fig. 1 und
- Fig. 4: eine teilweise geschnittene Darstellung einer Anordnung mit zwei Werkstücken, die mit dem Befestigungsmittel der Fig. 1 miteinander verbunden sind.

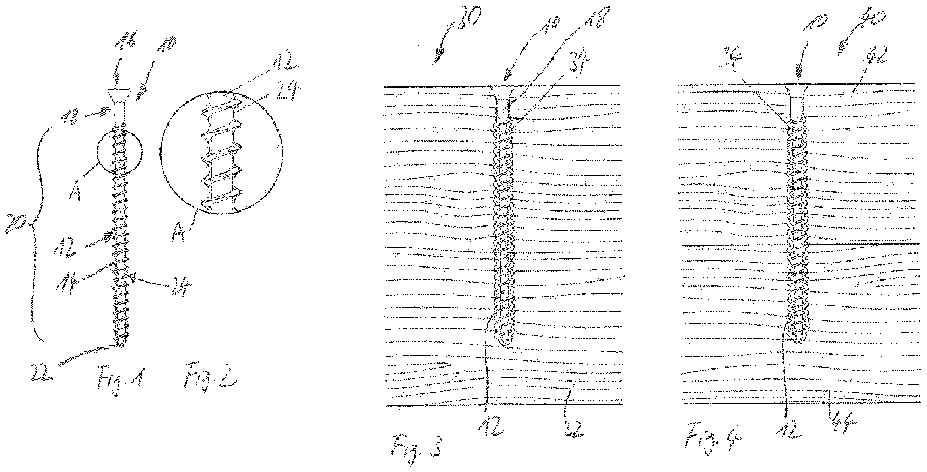

Fig. 1 zeigt ein erfindungsgemäßes Befestigungsmittel in Form einer Holzschraube 10. Die Holzschraube 10 weist einen Schaft 12 mit einem Holzgewinde 14 und einem Schraubenkopf 16 auf. Eine Unterseite des Schraubenkopfs 16, die dem Schaft 12 zugewandt ist, ist kegelstumpfförmig ausgebildet. Eine Oberseite des Schraubenkopfs 16 ist eben ausgebildet und weist eine, in Fig. 1 nicht erkennbare, Antriebsausbildung auf, beispielsweise in Form einer Antriebsvertiefung.

Anschließend an die Unterseite des Schraubenkopfs 16 weist der Schaft 12 in einem ersten Abschnitt 18 einen glatten Außenumfang auf und ist kreiszylindrisch ausgebildet. Auf den ersten Abschnitt 18 folgt dann der mit dem Gewinde 14 versehene zweite Abschnitt 20 des Schafts 12, der an seinem, dem Schraubenkopf 16 gegenüberliegenden Ende mit einer Bohrspitze 22 versehen ist. Das Gewinde 14 ist als Holzgewinde ausgebildet. Die Bohrspitze 22 ist dazu ausgebildet, beim Eindrehen der Schraube 10 in ein Werkstück aus Holz oder Holzwerkstoff eine Bohrung auszubilden, die dem Kerndurchmesser des Schafts im Bereich 20 entspricht. Beim Eindrehen der Schraube 10 dringen die Gewindegänge des Gewindes 14 in die das Bohrloch umgebende Wand des Werkstücks ein und sorgen dadurch, wie dies auch bei konventionellen Holzschrauben bekannt ist, bereits unmittelbar nach Beenden des Eindrehens für eine tragfähige Verbindung zwischen Schraube 10 und Werkstück. Im Rahmen der Erfindung können die Bohrspitze und der glatte Abschnitt 18 des Schafts entfallen und die Schraube kann beispielsweise auch als Vollgewindeschraube, Stockschraube oder Gewindestange ausgebildet sein.

Der Schaft 12 ist in seinem zweiten Abschnitt 20, der mit dem Gewinde 14 versehen ist, mit einer Klebstoffbeschichtung 24 versehen. Diese Klebstoffbeschichtung 24 bedeckt die Oberfläche des Schafts 12 im Bereich 20 vollständig und wird beispielsweise durch Eintauchen des Abschnitts 20 des Schafts 12 in flüssigen Klebstoff, Herausziehen des Abschnitts 20 und anschließendes Verfestigen des Klebstoffs aufgebracht.

Beim Aufbringen der Klebstoffbeschichtung 34 auf den Schaft 12 der Schraube 10 kann der Klebstoff 34 durch Wärmezufuhr in einen flüssigen Zustand gebracht werden oder beispielsweise auch durch Mischen mit einem Lösungsmittel sich in einem flüssigen Zustand befinden. Das Abkühlen des Klebstoffs und/oder das Verdampfen des Lösemittels führt dann zum Verfestigen des Klebstoffs, so dass dadurch die Klebstoffbeschichtung 24 auf dem Schaft 12 gebildet ist.

Fig. 2 zeigt die Einzelheit A aus Fig. 1 im vergrößerten Maßstab. Zu erkennen ist ein Abschnitt des Schafts 12 und die auf den Schaft 12 aufgebrachte Klebstoffbeschichtung 24. Es ist zu erkennen, dass die Schichtstärke der Klebstoffbeschichtung 24 zwischen den Flanken des Gewindes 14 größer ist als im Bereich der Gewindeflanken. Im Rahmen der Erfindung kann die Schichtstärke der Klebstoffbeschichtung 24 aber auch gleichmäßig sein, beispielsweise dann, wenn die Klebstoffbeschichtung aufgesprüht wird.

Der Klebstoff der Klebstoffbeschichtung 24 ist thermoplastisch und/oder warmhärtend ausgebildet. In dem in Fig. 1 und Fig. 2 dargestellten Zustand klebt die Klebstoffbeschichtung 24 nicht oder nur schwach. Die Schraube 10 kann dadurch in konventioneller Weise gehandhabt werden und beispielsweise auch problemlos im Bereich des Gewindes 14 angefasst werden. Beim Eindrehen der Schraube 10 in ein Werkstück, insbesondere in ein Werkstück aus Holz oder Holzwerkstoff, wird durch die beim Einschrauben entstehende Reibungswärme die Klebstoffbeschichtung 24 erwärmt. Die Erwärmung ist dabei so stark, dass der Klebstoff der Klebstoffbeschichtung 24 flüssig wird oder zumindest weich wird. Der Klebstoff der Klebstoffbeschichtung 24 kann dadurch entlang des Schafts und damit auch entlang der Bohrung des durch die Holzschraube 10 beim Eindrehen geschaffenen Bohrlochs verteilt werden und insbesondere kann der Klebstoff der Klebstoffbeschichtung 24 ein Stück weit in das Material des Werkstücks eindringen. Beim Einschrauben der Schraube 10 in ein Werkstück aus Holz oder Holzwerkstoff schneiden die Gewindeflanken des Gewindes 14 beim Eindrehen Holzfasern des Holzwerkstoffs an. Der Klebstoff der Klebstoffbeschichtung 24 kann beim Einschrauben zwischen die Holzfasern, insbesondere die angeschnittenen Holzfasern, eindringen. Nach Beendigen des Einschraubvorgangs kühlen die Schraube 10 und auch der Klebstoff der Klebstoffbeschichtung sowie das Werkstück im Bereich des durch die Holzschraube 10 geschaffenen Bohrlochs wieder ab. Der Klebstoff verfestigt, beispielsweise durch Erstarren oder Warmhärten. Dabei werden insbesondere die angeschnittenen Holzfasern miteinander und mit dem Schaft 12 der Schraube 10 verklebt. Auch nicht angeschnittene Holzfasern, beispielsweise im Bereich zwischen den Gewindegängen des durch die Schraube 10 im Werkstück geformten Innengewindes, werden miteinander und mit dem Schaft 12 der Schraube 10 verklebt.

Beim Einschrauben der Schraube 10 erhitzt sich der Schaft 12 der Schraube beispielsweise auf eine Temperatur von über 100 °C. Diese Temperatur reicht aus, um den Klebstoff 34 zum Schmelzen zu bringen, beispielsweise einen Schmelzklebstoff, bzw. eine Vernetzungsreaktion von warmhärtenden, insbesondere einkomponentigen, Klebstoffen auszulösen. Die Klebstoffbeschichtung kann ein Gemisch aus Klebstoffen, die bei Erwärmung weich werden oder verflüssigen, mit anderen Worten thermoplastischen Klebstoffen, und warmhärtenden Klebstoffen aufweisen. Im Rahmen der Erfindung kann beispielsweise auch ein Gemisch aus warmhärtendem Klebstoff und thermoplastischem Bindemittel verwendet werden.

Durch Abkühlen oder Ausdampfen des Lösungsmittels und/oder eine Vernetzungsreaktion verfestigt sich der Klebstoff 34 wieder. Der Schaft 12 der Schraube 10 wird so mit den angeschnittenen Holzfasern verklebt und eine Leistungsfähigkeit der Verbindung wird gesteigert.

Selbstverständlich kann die Schraube 10 mittels hilfskraftbetriebener Schrauber, insbesondere elektrische, kabelgebundene Schrauber, Akkuschrauber, Druckluftschrauber, eingeschraubt werden, beispielsweise mit kontrollierter Drehzahl, um eine ausreichende Erwärmung des Schafts 12 und der Klebstoffbeschichtung 24 sicherzustellen und auf der anderen Seite ein Überhitzen des Klebstoffs 34 der Klebstoffbeschichtung 24 zu vermeiden.

Der besondere Vorteil der erfindungsgemäßen Schraube 10 ist, dass unmittelbar nach dem Einschrauben die Verbindung zwischen Schraube 10 und Werkstück belastet werden kann, und zwar gleich hoch belastet werden kann wie eine konventionelle Schraube ohne Klebstoffbeschichtung 24. Nach dem Verfestigen des Klebstoffs der Klebstoffbeschichtung 24 ist die Tragkraft und Steifigkeit der Verbindung zwischen Schraube 10 und Werkstück noch einmal deutlich erhöht, da zusätzlich noch ein Stoffschluss zwischen dem Werkstück und dem Schaft 12 der Schraube 10 hergestellt ist.

Fig. 3 zeigt eine Anordnung 30 mit einem Werkstück 32 aus Massivholz, wobei in das Werkstück 32 die Schraube 10 der Fig. 1 und 2 eingeschraubt wurde. Die Schraube 10 wurde dabei so weit in das Werkstück 32 eingeschraubt, bis eine Oberseite des Schraubenkopfs 16 bündig ist mit der in Fig. 3 oben liegenden Oberfläche des Werkstücks 32. Das Einschrauben der Schraube 10 in das Werkstück 32 kann beispielsweise zu dem Zweck erfolgen, das Werkstück 32 zu stabilisieren. Die Schraube 10 wird in diesem Fall nicht zum Befestigen eines zweiten Werkstücks auf dem ersten Werkstück 32 oder zum Befestigen anderer Gegenstände verwendet, sondern zur statischen Versteifung des Werkstücks 32.

Anhand der Fig. 3 ist zu erkennen, dass Klebstoff 34 der Klebstoffbeschichtung 24 sich nach dem Einschrauben der Schraube 10 in das Werkstück 32 ein Stück weit in das Material des Werkstücks 32 ausgebreitet hat. Dies ist in Fig. 3 daran zu erkennen, dass ausgehend vom Schaft 12 der Schraube 10 der Klebstoff 34 einen dickeren oder breiteren Bereich einnimmt als im nicht eingeschraubten Zustand der Schraube 10 in Fig. 1. Durch die beim Einschrauben entstehende Reibungswärme hat sich der Klebstoff 34 verflüssigt und ist in das Material des Werkstücks 32, das das Bohrloch umgibt, das beim Eindrehen der Schraube 10 gebildet wurde, eingedrungen. Insbesondere hat der Klebstoff 34 dadurch von dem Gewinde 14 der Schraube 10 angeschnittene Holzfasern miteinander und mit dem Schaft 12 der Schraube 10 verklebt. Es ist Fig. 3 aber auch zu entnehmen, dass durch das Eindringen des Klebstoffs 34 in das Material des Werkstücks 32 das Material des Werkstücks 32 in dem das Bohrloch unmittelbar umgebenden Bereich verstärkt wird.

Es ist Fig. 3 weiter zu entnehmen, dass der Klebstoff 34 sich auch in den Bereich 18 des Schraubenschafts ausgebreitet hat und infolgedessen auch für einen Stoffschluss zwischen dem Abschnitt 18 des Schraubenschafts 12 und dem Werkstück 32 sorgt. Lediglich im Bereich der Unterseite des Schraubenkopfs 16 ist kein Klebstoff 34 vorhanden. Im Rahmen der Erfindung kann die Unterseite des Schraubenkopfs aber so ausgebildet sein, beispielsweise annähernd senkrecht zur Längsachse des Schraubenschafts 12, dass beim Einschrauben verflüssigter Klebstoff 34 aufsteigt und auch für einen Stoffschluss zwischen der Unterseite des Schraubenkopfs und dem Werkstück 32 sorgt.

Fig. 4 zeigt eine weitere erfindungsgemäße Anordnung 40, bei der die Schraube 10 der Fig. 1 und 2 in zwei Werkstücke 42, 44 aus Massivholz eingeschraubt wurde. Mittels der Schraube 10 werden infolgedessen die beiden Werkstücke 42, 44 miteinander verbunden. Das erste Werkstück 42 wird vollständig von der Schraube 10 durchsetzt. Im zweiten Werkstück 44 ist beim Einschrauben der Schraube 10 ein Sackloch entstanden, das durch den Schaft 12 der Schraube 10 gefüllt ist.

Der Klebstoff 34 der Klebstoffbeschichtung hat sich in gleicher Weise, wie bereits anhand der Fig. 3 erläutert wurde, ein Stück weit in das Material der Werkstücke 42, 44 ausgebreitet. Eine Tragfähigkeit und Steifigkeit der Verbindung zwischen den beiden Werkstücken 42, 44 ist dadurch gegenüber der Tragfähigkeit und Steifigkeit einer Verbindung mit einer konventionellen Schraube wesentlich erhöht. Zum einen existiert zwischen dem Schaft 12 der Schraube 10 und dem Material der beiden Werkstücke 42, 44 zusätzlich zu dem Gewindeeingriff noch ein Stoffschluss und zum anderen ist das Material der Werkstücke 42, 44 in dem das Bohrloch, das durch das Eindrehen der Schraube 10 geschaffen wurde, unmittelbar umgebenden Bereich durch den eingedrungenen und verfestigten Klebstoff 34 stabilisiert.

Wie bereits ausgeführt wurde, kann die erfindungsgemäße Schraube 10 in sehr einfacher Weise wie eine konventionelle Schraube gehandhabt werden, da die Klebstoffbeschichtung 24 mit dem Klebstoff 34 auf den Schaft 12 der Schraube 10 aufgebracht ist. Idealerweise klebt die Klebstoffbeschichtung 24 vor dem Einschrauben der Schraube 10 nicht oder lediglich schwach. Bei dem erfindungsgemäßen Verfahren ist somit kein separates Einbringen des Klebstoffs in ein vorher angefertigtes Bohrloch, eine Bohrlochreinigung oder dergleichen erforderlich. Darüber hinaus entsteht kein Abfall, beispielsweise durch Behältnisse für den Klebstoff und Spritzen oder dergleichen zum Mischen und Einbringen des Klebstoffs in ein Bohrloch.

## Patentansprüche

1. Befestigungsmittel, insbesondere Holzschraube aus Metall, mit einem Schaft, der wenigstens abschnittsweise mit einem Gewinde versehen ist, und mit einem Kopf mit einer Antriebsausbildung, **dadurch gekennzeichnet, dass** der Schaft wenigstens im Bereich des Gewindes vor dem Eindrehen des Befestigungsmittels in ein Werkstück mit einer wenigstens teilweise verfestigten Klebstoffbeschichtung versehen ist, wobei die Klebstoffbeschichtung thermoplastisch und/oder warmhärtend ausgebildet ist und sich die Klebstoffbeschichtung unter Temperatureinfluss der beim Einschrauben entstehenden Reibungswärme wenigstens teilweise verflüssigt.

2. Befestigungsmittel nach Anspruch 1, **dadurch gekennzeichnet, dass** das Befestigungsmittel als Vollgewindeschraube, bei der sich das Gewinde über den vollständigen Schaft erstreckt, als Teilgewindeschraube, bei der sich das Gewinde nur über einen Abschnitt des Schafts erstreckt, als Stockschraube oder als Gewindestange ausgebildet ist, wobei insbesondere das Gewinde als Holzgewinde ausgebildet ist.

3. Befestigungsmittel nach Anspruch 1 oder 2, **dadurch gekennzeichnet, dass** die Klebstoffbeschichtung
- Klebstoffe aufweist, die unter anderem zwei Hydroxphenyl-Gruppen tragen, insbesondere Bisphenol-A-Epichlorhydrinharze und/oder Bisphenol-F-Epichlorhydrinharze, insbesondere 1,6-Bis(2,3-epoxypropoxy)hexan / 1,4-Bis(2,3-epoxypropoxy)butan / 2,2-Bis(4-hydroxyphenyl)propan,
- Klebstoffe aufweist, die unter anderem durch Polymerisation von Acrylsäure-Estern hergestellt werden, insbesondere Tetramethylendimethacrylat, Methacrylsäure, 1,2-Cyclohexandicarboxylsäure, 1,2-Diisononylester, 1,6-Hexandiylbismethacrylat, 2-Ethylhexylmethacrylat und/oder Tetrahydrofurfurmethacrylat,
- Klebstoffe aufweist, die unter anderem durch Polymerisation aus Alkenen, insbesondere Ethylen, Propylen, hergestellt werden, insbesondere Ethylen-Propylen-Copolymer, Polyethylen, Polypropylen und/oder Ethylen-Vinylacetat,
- Klebstoffe aufweist, die auf Basis einer der o.g. Polymere in Kombination mit klebrig machenden Harzen und/oder Wachsen und/oder Additiven hergestellt werden,
- und/oder Klebstoffe aufweist, die unter anderem durch die Polymerisierung von Styrol hergestellt werden, insbesondere Styrol-Butadien-Polymer, Acrylnitril-Butadien-StyrolCopolymer und/oder Styrol-Acrylnitril-Copolymer.

4. Befestigungsmittel nach wenigstens einem der vorstehenden Ansprüche, **dadurch gekennzeichnet, dass** die Klebstoffbeschichtung durch Eintauchen des Schafts in flüssigen Klebstoff und anschließendes Verfestigen des Klebstoffs aufgebracht ist.

5. Verfahren zum Anordnen eines Befestigungsmittels nach wenigstens einem der vorstehenden Ansprüche in wenigstens einem Werkstück, insbesondere aus Holz oder Holzwerkstoff, **gekennzeichnet durch** die Schritte: Einschrauben des Befestigungsmittels in das Werkstück, insbesondere in eine Bohrung im Werkstück, wenigstens teilweises Verflüssigen der Klebstoffbeschichtung unter Temperatureinfluss der beim Einschrauben entstehenden Reibungswärme, Verfestigen des Klebstoffs und dadurch Herstellen eines Stoffschlusses zwischen dem Werkstück und dem Schaft des Befestigungsmittels.

6. Verfahren nach Anspruch 5, **gekennzeichnet durch** Vorbohren des Werkstücks und Herstellen eines Bohrlochs mit einem Bohrlochdurchmesser, der kleiner oder gleich dem Kerndurchmesser des Gewindes am Schaft ist.

7. Verfahren nach Anspruch 5 oder 6, **gekennzeichnet durch** Eindringen wenigstens eines Teils des Klebstoffs in das Werkstück beim Verflüssigen der Klebstoffbeschichtung.

8. Verfahren nach einem der Ansprüche 5 bis 7, **gekennzeichnet durch** Einschrauben des Befestigungsmittels in ein Werkstück aus Holz oder Holzwerkstoff, wobei beim Verflüssigen der Klebstoffbeschichtung der Klebstoff wenigstens teilweise zwischen Holzfasern, insbesondere angeschnittene Holzfasern, des Werkstücks eindringt, und Verkleben von Holzfasern untereinander und mit dem Schaft des Befestigungsmittels beim Erstarren und/oder Aushärten des Klebstoffs.

9. Anordnung mit wenigstens einem Befestigungsmittel nach Anspruch 1 bis 4 und wenigstens einem Werkstück, wobei der Schaft des Befestigungsmittels wenigstens abschnittsweise in dem Werkstück angeordnet ist, **dadurch gekennzeichnet, dass** der beim Einschrauben des Befestigungsmittels in das Werkstück wenigstens teilweise verflüssigte oder weich gewordene Klebstoff der Klebstoffbeschichtung wenigstens teilweise in das den Schaft des Befestigungsmittels umgebende Material des Werkstücks eingedrungen und dort verfestigt ist.

10. Anordnung nach Anspruch 9, **dadurch gekennzeichnet, dass** das Werkstück aus Holz oder Holzwerkstoff besteht und dass Holzfasern des Werkstücks mittels des Klebstoffs miteinander und mit dem Schaft des Befestigungsmittels verklebt sind.

11. Anordnung nach Anspruch 10, **dadurch gekennzeichnet, dass** die Holzfasern des Werkstücks und der Schaft des Befestigungsmittels im Bereich des Gewindes des Schafts miteinander verklebt sind.
